**Europäisches Patentamt**

**European Patent Office**

**Office européen des brevets**

(19)

(11) Veröffentlichungsnummer : **0 425 947 B1**

(12) # EUROPÄISCHE PATENTSCHRIFT

(45) Veröffentlichungstag der Patentschrift :
24.11.93 Patentblatt 93/47

(51) Int. Cl.$^5$ : **C09D 167/07**, C08G 63/676

(21) Anmeldenummer : **90120151.7**

(22) Anmeldetag : **20.10.90**

(54) **Polymerisierbare, wasserlösliche Bindemittel.**

(30) Priorität : **01.11.89 DE 3936296**

(43) Veröffentlichungstag der Anmeldung :
**08.05.91 Patentblatt 91/19**

(45) Bekanntmachung des Hinweises auf die
Patenterteilung :
**24.11.93 Patentblatt 93/47**

(84) Benannte Vertragsstaaten :
**BE DE ES FR GB IT NL**

(56) Entgegenhaltungen :
EP-A- 0 037 463
EP-A- 0 144 703
EP-A- 0 167 962
EP-A- 0 320 734

(73) Patentinhaber : **Wolff Walsrode
Aktiengesellschaft
Postfach 15 15
D-29655 Walsrode (DE)**

(72) Erfinder : **Kressdorf, Burkhard, Dr.
Ellinghäuser Strasse 15
W-3030 Walsrode (DE)**
Erfinder : **Hoppe, Lutz, Dr.
Am Badeteich 8
W-3030 Walsrode (DE)**
Erfinder : **Lühmann, Erhard, Dipl.-Ing.
Kastanienweg 2
W-3036 Bomlitz (DE)**
Erfinder : **Szablikowski, Klaus, Dr.
Claudiusstrasse 5
W-3030 Walsrode (DE)**

(74) Vertreter : **Braun, Rolf, Dr. et al
Bayer AG Konzernverwaltung RP
Patentabteilung
D-51368 Leverkusen (DE)**

**Beschreibung**

Die Erfindung betrifft neue wasserlösliche, polymerisierbare Bindemittel für Lackanwendungen.

Lacksysteme mit keinem oder nur geringem Gehalt an organischem Lösungsmittel finden wachsendes Interesse. Häufig können jedoch die gewünschten Verarbeitungsviskositäten solcher Bindemittelsysteme nur durch den Zusatz copolymerisierbarer Reaktivverdünner erreicht werden. Derartige Lacksysteme emitieren keine oder nur geringe Anteile organischer Substanzen, können aber eine starke Hautreizung oder Sensibilisierung der Haut bewirken. Außerdem beeinflußt der je nach Viskositätseinstellung schwankende Anteil an Reaktivverdünnern die Lackeigenschaften zum Teil erheblich. Lacksysteme mit 100 % Festkörperanteil sind für die offenporige Holzlackierung nicht geeignet.

Wasserverdünnbare, polymerisierbare Lackbindemittel sind an sich bekannt. Sie sind aber im allgemeinen nicht in Wasser löslich, sondern nur emulgierbar. Daraus ergeben sich folgende Nachteile:

1. Die Dispersionen sind nur aufwendig herstellbar.
2. Die Lagerstabilität ist begrenzt.
3. Die Viskosität läßt sich bei Dispersionen weniger einfach einstellen als bei echten Lösungen.
4. Mit Dispersionen erreicht man in der Regel eine schlechtere Porenbenetzung bei der Lackierung von Holz als bei der Verwendung von Lacken, die echte Lösungen sind.

Wasserverdünnbare, polymerisierbare Bindemittel für die Strahlenhärtung stellen bisher stets Öl-in-Wasser-Dispersionen dar (vgl. z.B. DE-A-3 441 154, EP-A-0 290 684, DE-A-3 340 589).

In der DE-A-3 241 264 werden wäßrige, strahlungshärtende Bindemittel beschrieben, die durch Cokondensation von Dicarbonsäuren und Acrylsäure mit Polyethylenglykol oder Polypropylenglykol sowie oxalkyliertem, 3- bis 6-wertigem Alkohol hergestellt werden. Derartige Lackbindemittel sind in Wasser emulgierbar, jedoch nicht löslich.

Ähnliche Polyester sind in der DE-A-3 340 589 beschrieben. Durch den Einbau höherer Anteile an Polyalkylenglykol in die Polyester werden emulgierbare bzw. sogar wasserlösliche Produkte hergestellt, die jedoch eine ungenügende Härte aufweisen (siehe Vergleichsbeispiel 2).

Die DE-A-3 441 154 betrifft ungesättigte Polyester, die ohne organische Lösungsmittel und ohne externe Emulgatoren in Wasser dispergiert werden können. Nachteilig an diesen Polyestern ist ihre im Vergleich zu Acrylatestern langsame Härtungsgeschwindigkeit. Außerdem sind diese Polyester nicht wasserlöslich, sondern nur emulgierbar.

In der EP-A-0 320 734 werden ungesatigte, wasserlösliche Polyester beschrieben, die für die Strahlenhartung geeignet sind. Diese Polyester enthalten Polyalkylenglykole mit einem hohen Alkylierungsgrad, die sich ungunstig auf die Filmeigenschaften auswirken. Griff und Harte der ausgehärteten Bindemittel genügen ebenfalls nicht allen Anforderungen.

Aufgabe der vorliegenden Erfindung ist es, ein wasserlösliches, polymerisierbares Lackbindemittel zur Verfügung zu stellen, das nach der Härtung gute Lackeigenschaften, insbesondere verbesserte Härte und Wasserfestigkeit aufweist.

Gegenstand der vorliegenden Erfindung sind wasserlösliche Bindemittel mit wenigstens einer polymerisierbaren Doppelbindung auf Basis von Polyalkylenglykolen, alkoxyliertem Polyol sowie Carbonsäuren, dadurch gekennzeichnet, daß die Bindemittel erhältlich sind durch Kondensation folgender Verbindungen:

A. wenigstens eines Polyalkylenglykols mit einem Molekulargewicht von 300 bis 800
B. gegebenenfalls wenigstens eines Polyalkylenglykols mit einem Molekulargewicht kleiner als 300
C. wenigstens eines alkoxylierten dreiwertigen Polyols
D. gegebenenfalls wenigstens eines alkoxylierten Polyols mit mehr als drei Hydroxyendgruppen
E. wenigstens einer Polycarbonsäure oder eines Derivates davon
F. wenigstens einer ungesättigten Monocarbonsäure oder eines Derivates davon.

Bevorzugte Polyalkylenglykole A sind Polyethylenglykole. Besonders bevorzugt sind Polyethylenglykole mit einem Molekulargewicht von 400 bis 600. Bevorzugte Polyalkylenglykole B sind Polyethylenglykole und Polypropylenglykole, insbesondere mit einem Molekulargewicht von wenigstens 150.

Unter oxalkylierten 3-wertigen bzw. 4- bis 6-wertigen aliphatischen Polyolen C und D werden oxethylierte und/oder oxpropylierte 3-wertige bzw. 4- bis 6-wertige aliphatische Alkohole verstanden. Bevorzugte alkoxylierte Polyole C haben 3 bis 20 Mol Ethylen- oder Propylenoxid/Mol Polyol. Vorzugsweise haben die Polyole C ein Molekulargewicht von ca. 250 bis 600 g/Mol. Die Grundkörper der Polyole C sind vorzugsweise 3-wertige aliphatische Alkohole, z.B. Glycerin, Trimethylolpropan, Trimethylolethan, vorzugsweise Trimethylolpropan und Glycerin, insbesondere Glycerin. Das Polyol C hat 3 endständige OH-Gruppen.

Alkoxylierte Polyole D haben mehr als drei Hydroxylgruppen und 1 bis 20 Mol Ethylen- oder Propylenoxideinheiten pro Mol Polyol, vorzugsweise 1 bis 5 Mol Ethylen- oder Propylenoxideinheiten pro Mol Polyol. Der Grundkörper der Polyole D besteht vorzugsweise aus ungesättigten aliphatischen 4- bis 6-wertigen Alkoholen, z.B. Pentaerythrit, Dipentaerythrit, Erythritsorbit, Di-Trimethylolpropan, vorzugsweise Pentaerythrit.

Bei den Polycarbonsäuren E bzw. den Derivaten davon handelt es sich vorzugsweise um Dicarbonsäuren oder Tricarbonsäuren. Bevorzugte Derivate sind Anhydride. Besonders bevorzugt sind Anhydride von Dicarbonsäuren. Als Dicarbonsäuren bzw. Dicarbonsäureanhydride, die für die Herstellung der erfindungsgemäßen Polyester in Frage kommen, seien beispielsweise genannt:

Malonsäure, Bernsteinsäure, Glutarsäure, Adipinsäure, Pimelinsäure, Korksäure, Acelainsäure, Sebacinsäure, Maleinsäure, Chlormaleinsäure, Fumarsäure, Citraconsäure, Itaconsäure, Norbornendicarbonsäure, Hexahydrophthalsäure, Methylhexahydrophthalsäure, Tetrahydrophthalsäure, Endomethyltetrahydrophthalsäure, Phthalsäure, Isophthalsäure, Terephthalsäure oder die Anhydride vorgenannter Dicarbonsäuren, sofern sie herstellbar sind, vorzugsweise Maleinsäure und Fumarsäure, besonders bevorzugt Maleinsäureanhydrid.

Bevorzugte ungesättigte Monocarbonsäuren F sind Acrylsäure und Methacrylsäure.

In einer bevorzugten Ausführungsform werden die Komponenten A bis F in folgenden Mengenverhältnissen eingesetzt:

| Polyalkylenglykol A: | 10 bis 30 Gew.-Teile, |
| insbesondere: | 15 bis 25 Gew.-Teile; |
| | |
| Polyalkylenglykol B: | 0 bis 20 Gew.-Teile, |
| insbesondere: | 0,1 bis 5 Gew.-Teile; |
| | |
| alkoxyliertes Polyol C: | 20 bis 60 Gew.-Teile, |
| insbesondere: | 30 bis 50 Gew.-Teile; |
| | |
| alkoxyliertes Polyol D: | 0 bis 10 Gew.-Teile, |
| insbesondere: | 1 bis 5 Gew.-Teile; |
| | |
| Polycarbonsäure E: | 10 bis 30 Gew.-Teile, |
| insbesondere: | 20 bis 25 Gew.-Teile; |
| | |
| ungesättigte Carbonsäure F: | 5 bis 25 Gew.-Teile, |
| insbesondere: | 8 bis 16 Gew.-Teile. |

Bei der Herstellung der erfindungsgemäßen Bindemittel können die üblichen Hilfsstoffe, wie Inhibitoren, Kondensationsbeschleuniger, Radikalbildner oder Photoinitiatoren zur Härtung eingesetzt werden. Die Herstellung erfolgt nach bekannten Methoden der Polyesterherstellung durch azeotrope Veresterung in Gegenwart eines Schleppmittels und eines üblichen Polymerisationsinhibitors bei Temperaturen von 60 bis 140° C, wobei das entstehende Wasser azeotrop entfernt wird. Als Schleppmittel kommen aliphatische und aromatische Kohlenwasserstoffe in Frage, z.B. Alkane und Cyclohexane, wie n-Hexan, n-Heptan und Cyclohexan und Aromaten, wie Benzol, Toluol und Xylolisomere, und sogenannte Spezialbenzine, welche Siedepunkte zwischen 70 und 140° C aufweisen, besonders bevorzugte Schleppmittel sind Cyclohexan und Toluol. Die Menge des zugesetzten Kohlenwasserstoffs ist unkritisch, je nach verwendeter Apparatur kann die zugesetzte Menge zwischen der 0,1- und der zweifachen Menge des Reaktionsgemisches variieren. Besonders vorteilhaft ist das Verhältnis Reaktionsgemisch zu Kohlenwasserstoff von 1:0,3 bis 1:1. Schleppmittelreste werden aus dem Reaktionsgemisch nach der Destillation vorteilhafterweise nach der Zugabe von Wasser zum Reaktionsgemisch im Verhältnis von 0,1:1 als Azeotrop mit dem Waser abdestilliert.

Als Veresterungskatalysatoren eignen sich organische und anorganische Säuren, z.B. p-Toluolsulfonsäure, Salzsäure oder konzentrierte Schwefelsäure, bevorzugt ist p-Toluolsulfonsäure. Ebenfalls geeignet sind Basen und auch Metallsalze, wie z.B. Antimon-, Zinn-, Titan- und Bleiverbindungen (vgl. Houben-Weyl, Band E 20, Georg Thieme Verlag, Stuttgart, 1987).

Zur Vermeidung einer vorzeitigen Polymerisation wird die Veresterung zweckmäßigerweise in Gegenwart geringer Mengen von Inhibitoren durchgeführt. Dabei handelt es sich um die üblichen zur Verhinderung einer thermischen Polymerisation verwendeten Verbindungen, z.B. vom Typ des Hydrochinons, der Hydrochinonmonoalkylether, des 2-6-Di-tert.-Butyl-Phenols, der Nitrosamine, der Phenothiacine oder der Phosphorigsäureester. Sie werden im allgemeinen in Mengen von 0,001 bis 3,0 Gew.-%, vorzugsweise in Mengen von 0,005 bis 0,5 Gew.-% eingesetzt.

Es ist auch möglich, statt alle Komponenten in einer Stufe gleichzeitig umzusetzen, die Komponenten A und E in der ersten Stufe und dieses Vorkondensat in einer zweiten Stufe mit den übrigen Komponenten umzusetzen. Die Umsetzung in einer Stufe wird bevorzugt.

Die Reaktion wird bis zu einer Säurezahl des Polyesters von 1 bis 50, vorzugsweise von 10 bis 30 mg KOH/g-Substanz durchgeführt. Zur Erzielung niedriger Säurezahlen ist es zweckmäßig, das zurücklaufende Schleppmittel zu trocknen, z.B. mit einem Molekularsieb.

Überraschenderweise sind die erfindungsgemäßen Lackbindemittel gut wasserlöslich und weisen auch gute Lackeigenschaften auf. Wie aus dem Vergleichsbeispiel 1 ersichtlich, führt die Verwendung eines Polyethylenglykols mit einem Molekulargewicht von 2000 zu einem Reaktionsprodukt, welches nicht die nötige Pendelhärte aufweist. Das erfindungsgemäße Bindemittel bildet in Wasser echte oder kolloidale Lösungen. Unter kolloidalen Lösungen werden solche Lösungen verstanden, bei denen die Teilchengröße so gering ist, daß die Proben bei einer Schichtdicke von 1 mm und einer Wellenlänge von 750 nm eine Transmission von mehr als 95 % aufweisen. Im Vergleichsbeispiel 2 kann eine derartige Klarlöslichkeit nicht erreicht werden.

Die erfindungsgemäßen Umsetzungsprodukte können die zur Erzielung besonderer technischer Effekte notwendigen Komponenten wie Füllstoffe, Pigmente, Farbstoffe, Tixotropiermittel, Glättmittel, Abdeckmittel zur Ausschaltung der Luftinhibierung, Mattierungsmittel und Verlaufmittel usw. in üblichen Mengen enthalten. Die Lackeigenschaften können auf Wunsch durch Zusatz von Reaktivverdünnern oder weiteren hochmolekularen Lackbindemitteln weiter entsprechend den jeweiligen Erfordernissen verändert werden.

Das Lackbindemittel kann nicht nur mit Wasser, sondern auf Wunsch auch mit organischem Lösungsmittel verdünnt werden. Man erreicht schon bei geringer Verdünnung eine deutliche Reduzierung der Viskosität der Mischung.

Geeignete Applikationsformen sind Spritzen, Walzen, Rakeln, Gießen, Streichen und Tauchen.

Das erfindungsgemäße Bindemittel kann nach Verdunstung des Wassers polymerisiert werden, wobei man Lackschichten mit günstigen Oberflächeneigenschaften auf z.B. Holz erhält. Die Polymerisation kann thermisch und/oder unter Zusatz von Polymerisationsinitiatoren (z.B. Radikalbildnern) erfolgen, aber auch durch energiereiche Strahlung (UV-, Elektronen-, Röntgen-, Gamma-Strahlen), wobei Photoinitiatoren zugesetzt werden können; besonders bevorzugt ist die UV-Härtung.

Als Photoinitiatoren sind die für die Strahlungshärtung bekannten Verbindungen geeignet, z.B. aromatische Ketonverbindungen, Benzophenone, Alkylbenzophenone, halogenmethylierte Benzophenone, Michler's Keton, Anthron und halogenierte Benzophenone. Weiter geeignet sind 2,4,6-Trimethylbenzoyldiphenylphosphinoxid, Phenylglyoxylsäureester, Anthrachinon und seine zahlreichen Derivate, besonders Benzoin und seine Derivate, ferner Benzilketale und Hydroxyalkylphenone, wie z.B. 2-Hydroxy-2-methyl-1-phenyl-propan-1-on, besonders bevorzugt sind Benzophenon und 2-Hydroxy-2-methyl-1-phenyl-propan-1-on.

Beispiele für geeignete Initiatoren sind in den deutschen Offenlegungsschriften 1 769 168, 1 769 853, 1 769 854, 1 807 297, 1 807 301, 1 919 678 sowie der DE-AS 1 694 143 beschrieben. Gemische dieser Verbindungen können ebenfalls verwendet werden.

UV-Absorber, weitere Stabilisatoren, organische Peroxide, können, wenn es der Anwendungszweck erfordert mitverwendet werden. Der Zusatz von Trockenstoffen, wie sie die üblichen verwendeten Metall-Naphthenate und -Chelate darstellen, führt zu einer vorteilhaften Beschleunigung des Härtevorgangs.

Beispiele

Für die azeotrope Veresterung wird ein 2-1-Glasreaktionsgefäß benutzt, das mit Rührer, Gaseinleitrohr, Wasserabscheider und Schleppmittelrückführung ausgerüstet ist, in die eine Trocknungseinheit, welche mit einem Molekularsieb gefüllt werden kann, eingebaut ist. Die erfindungsgemäßen Polyester werden unter Einsatz von 0,7 Gew.-% p-Toluolsulfonsäure als Katalysator und 0,1 Gew.-% des Inhibitors Di-tert.-butyl-hydrochinon und 0,005 Gew.-% des Inhibitors Phenothiazin (bezogen auf die Summe der Veresterungskomponenten) hergestellt. Das Schleppmittel Toluol wird im Verhältnis 1:3 zur Gesamtmenge eingesetzt.

Beispiel 1

Folgende Substanzen werden in der Rührapparatur umgesetzt:
19,500 Teile Polyethylenglykol 400 (A)
44,900 Teile tetraalkoxyliertes Glycerin (C)
3,560 Teile triethoxyliertes Pentaerythrit (D)
21,700 Teile Maleinsäureanhydrid (E)
9,550 Teile Acrylsäure (F)

Die Komponenten werden azeotrop verestert, bis zu einer Säurezahl von ca. 35. Nachfolgend wird das rücklaufende Toluol in einer Trocknungseinheit, die mit einem Molekularsieb gefüllt ist, getrocknet. Die Reaktion wird noch bis zu einer Säurezahl von ca. 20 weitergeführt. Anschließend wird das Schleppmittel im Vakuum abdestilliert, die Reaktionsmischung mit 20 Teilen Wasser versetzt und das Azeotrop (Toluol/Wasser) im Vakuum abdestilliert.

Prüfung des Lackbindemittels:

Nach Zusatz von 3 Gew.-% des Gemisches 2-Hydroxy-2-methyl-1-phenyl-propan-1-on : Benzophenon im Verhältnis 2:1 (bezogen auf das Reaktionsprodukt) zu der 90 gew.-%igen wäßrigen Lösung des Reaktionsproduktes aus Beispiel 1 wird die Probe auf eine Glasplatte in einer Schichtdicke von 90 μm aufgerakelt, getrocknet und mit UV-Licht bestrahlt (80 W/cm). Man erhält einen transparenten, glatten Film mit einer Pendelhärte nach König (DIN 53 157) von 95 s. Die Lackierung ist entsprechend DIN 53 168 wasserbeständig (vgl. Tabelle 1).

In gleicher Weise wird eine Holzplatte mit einer Schichtdicke von 120 μm beschichtet, getrocknet mit UV-Licht bestrahlt und der Verlauf beurteilt.

Beispiel 2

Beispiel 1 wird mit dem Unterschied wiederholt, daß anstelle des triethoxylierten Pentaerythrits pentaethoxyliertes Pentaerythrit eingesetzt wird. Die 90 gew.-%ige Lösung des Lackbindemittels in Wasser ist transparent, und die Pendelhärte des wie oben hergestellten Lackfilms beträgt 88 s. Der Film ist wasserbeständig (vgl. Tabelle 1).

Beispiel 3

Beispiel 1 wird mit dem Unterschied wiederholt, daß kein 4-wertiges alkoxyliertes Polyol eingesetzt wird. Man erhält ein zähflüssiges Produkt, das gut in Wasser löslich ist. Die Pendelhärte des wie oben hergestellten Lackfilms beträgt 70 s. Der Film ist wasserbeständig (vgl. Tabelle 1). Ohne das 4-wertige alkoxylierte Polyol ist die Härte des hergestellten Lackfilmes im Vergleich zu den Beispielen 1 und 2 reduziert. Die Elastizität ist etwas höher.

Beispiel 4

Beispiel 1 wird mit dem Unterschied wiederholt, daß gemäß Tabelle 1 ein weiteres Polyethylenglykol eingesetzt wird. Man erhält ein zähflüssiges Produkt, das gut in Wasser löslich ist. Die Pendelhärte des wie oben hergestellten Lackfilms beträgt 99 s. Der Film ist wasserbeständig. Die Härte des hergestellten Lackfilms ist höher als in Beispiel 1, der Verlauf befriedigend.

Vergleichsbeispiel 1

Das Vergleichsbeispiel 1 wird entsprechend Beispiel 1 der EP 0 320 734 nachgearbeitet. Das erhaltene Produkt ist wasserlöslich. Die Pendelhärte des Lackfilmes ist jedoch mit 53 s zu niedrig; daraus resultiert eine schlechte Kratzfestigkeit. Der Verlauf ist unbefriedigend.

Vergleichsbeispiel 2

Das Vergleichsbeispiel 2 wird entsprechend Beispiel 5 der DE-A 3 340 589 nachgearbeitet. Das erhaltene Produkt ist nur in Wasser emulgierbar, aber nicht löslich (vgl. Tabelle 1). Die Pendelhärte des Lackfilms von 50 s ist, wie im Vergleichsbeispiel 1, zu niedrig, d.h. die Kratzfestigkeit ist schlecht.

Tabelle 1

| Komponenten (Gew.-T) | Bsp. 1 | Bsp. 2 | Bsp. 3 | Bsp. 4 | Vergleichsbeispiel 1 | Vergleichsbeispiel 2 |
|---|---|---|---|---|---|---|
| Polyethylenglykol 200 | - | - | - | 2,0 | - | - |
| Polyethylenglykol 400 | 19,5 | 19,3 | 26,14 | 17,6 | 22 | 7,65 |
| Polyethylenglykol 2000 | - | - | - | - | 10 | 6,06 |
| 1,2-Propylenglykol tetraethoxyliertes | - | - | - | - | - | - |
| Glycerin tripropoxyliertes | 44,9 | 44,4 | 43,03 | 44,9 | - | - |
| Trimethylolpropan triethoxyliertes | - | - | - | - | 38 | 48,5 |
| Pentaerythrit pentaethoxyliertes | 3,56 | - | - | 3,56 | - | - |
| Pentaerythrit | - | 4,11 | - | - | - | - |
| Maleinsäureanhydrid | 21,7 | 21,44 | 20,81 | 21,7 | 17 | 16,3 |
| Acrylsäure | 9,55 | 9,44 | 9,16 | 9,55 | 10,7 | 21,43 |
| Säurezahl (mg KOH/g) | 21 | 22 | 22 | 23 | 15 | - |
| Transmission (%) | >99 | >99 | >99 | >99 | >99 | 0,4 |
| Pendelhärte (s) nach DIN 53 157 90 µm auf Glas | 90 | 88 | 70 | 99 | 53 | 50 |
| Verlauf auf Holz | gut | gut | befriedigend | befriedigend | unbefriedigend | unbefriedigend, leichte Kraterdildung |
| Wasserbeständigkeit DIN 53 169 | bestanden | bestanden | bestanden | bestanden | bestanden | bestanden |

## Patentansprüche

1. Wasserlösliche Bindemittel mit wenigstens einer polymerisierbaren Doppelbindung auf Basis von Polyalkylenglykolen, alkoxyliertem Polyol sowie Carbonsäuren, dadurch gekennzeichnet, daß die Bindemittel erhältlich sind durch Kondensation folgender Verbindungen:

   A. wenigstens eines Polyalkylenglykols mit einem Molekulargewicht von 300 bis 800
   B. gegebenenfalls wenigstens eines Polyalkylenglykols mit einem Molekulargewicht kleiner als 300
   C. wenigstens eines alkoxylierten dreiwertigen Polyols
   D. gegebenenfalls wenigstens eines alkoxylierten Polyols mit mehr als drei Hydroxyendgruppen
   E. wenigstens einer Polycarbonsäure oder eines Derivates davon

F. wenigstens einer ungesättigten Monocarbonsäure oder eines Derivates davon.

2. Wasserlösliche Bindemittel nach Anspruch 1, dadurch gekennzeichnet, das es erhältlich ist durch Umsetzung von
10 bis 30 Gew.-Teilen Polyalkylenglykol A,
0 bis 20 Gew.-Teilen Polyalkylenglykol B,
20 bis 60 Gew.-Teilen alkoxyliertem Polyol C,
0 bis 10 Gew.-Teilen alkoxyliertem Polyol D,
10 bis 30 Gew.-Teilen Polycarbonsäure E,
5 bis 25 Gew.-Teilen ungesättigte Carbonsäure F.

3. Bindemittel nach wenigstens einem der vorhergehenden Ansprüche, dadurch gekennzeichnet, daß das Polyol C drei Hydroxyendgruppen und 2 bis 20 Mol Ethylen- und/oder Propylenoxideinheiten pro Mol Polyol aufweist.

4. Bindemittel nach wenigstens einem der vorhergehenden Ansprüche, dadurch gekennzeichnet, daß das Polyol D mehr als drei Hydroxyendgruppen und 1 bis 20 Mol Ethylen- und/oder Propylenoxideinheiten aufweist.

5. Bindemittel nach wenigstens einem der vorhergehenden Ansprüche, dadurch gekennzeichnet, daß die Polycarbonsäure E eine Di- oder Tricarbonsäure oder deren Anhydrid ist.

6. Bindemittel nach wenigstens einem der vorhergehenden Ansprüche, dadurch gekennzeichnet, das die Polycarbonsäure E Maleinsäure, Maleinsäureanhydrid oder Fumarsäure und die ungesättigte Carbonsäure F Acrylsäure oder Methylacrylsäure ist.

7. Verfahren zur Herstellung von Polyestern mit wenigstens einer polymerisierbaren Doppelbindung gemäß Anspruch 1 durch Umsetzung folgender Verbindungen
    A. wenigstens eines Polyalkylenglykols mit einem Molekulargewicht von 300 bis 800
    B. gegebenenfalls wenigstens eines Polyalkylenglykols B mit einem Molekulargewicht kleiner als 300
    C. wenigstens eines alkoxylierten dreiwertigen Polyols
    D. gegebenenfalls wenigstens eines alkoxylierten 4- bis 6-wertigen Polyols
    E. wenigstens einer Polycarbonsäure oder eines Derivates davon
    F. wenigstens einer ungesättigten Monocarbonsäure oder eines Derivates davon.

8. Verfahren zur Oberflächenbehandlung eines Substrates mit einem Bindemittel bzw. Lack, dadurch gekennzeichnet, daß als Bindemittel ein Bindemittel gemäß wenigstens einem der Ansprüche 1 bis 6 verwendet wird.

9. Verfahren nach Anspruch 8, dadurch gekennzeichnet, daß das Bindemittel nach dem Auftrag thermisch und/oder peroxidisch gehärtet wird.

10. Verfahren nach Anspruch 8, dadurch gekennzeichnet, daß das Bindemittel unter Zusatz eines Photoinitiators nach dem Auftrag durch UV-Strahlung gehärtet wird.

**Claims**

1. Water-soluble binders containing at least one polymerizable double bond based on polyalkylene glycols, alkoxylated polyol and carboxylic acids, characterized in that the binders are obtainable by condensation of the following compounds:
    A. at least one polyalkylene glycol having a molecular weight of 300 to 800
    B. optionally at least one polyalkylene glycol having a molecular weight below 300
    C. at least one alkoxylated trihydric polyol
    D. optionally at least one alkoxylated polyol containing more then three terminal hydroxyl groups
    E. at least one polycarboxylic acid or a derivative thereof
    F. at least one unsaturated monocarboxylic acid or a derivative thereof.

2. Water-soluble binders as claimed in claim 1, characterized in that they are obtained by reaction of

10 to 30 parts by weight polyalkylene glycol A,
0 to 20 parts by weight polyalkylene glycol B,
20 to 60 parts by weight alkoxylated polyol C,
0 to 10 parts by weight alkoxylated polyol D,
10 to 30 parts by weight polycarboxylic acid E,
5 to 25 parts by weight unsaturated carboxylic acid F.

3. Binders as claimed in at least one of the preceding claims, characterized in that the polyol C contains three terminal hydroxy groups and 2 to 20 mol ethylene oxide and/or propylene oxide units per mol polyol.

4. Binders as claimed in at least one of the preceding claims, characterized in that the polyol D contains more than three terminal hydroxy groups and 1 to 20 mol ethylene oxide and/or propylene oxide units.

5. Binders as claimed in at least one of the preceding claims, characterized in that the polycarboxylic acid E is a dicarboxylic acid or tricarboxylic acid or anhydride thereof.

6. Binders as claimed in at least one of the preceding claims, characterized in that the polycarboxylic acid E is maleic acid, maleic anhydride or fumaric acid and the unsaturated carboxylic acid F is acrylic acid or methacrylic acid.

7. A process for the production of' the polyesters containing at least one polymerizable double bond claimed in claim 1 by reaction of the following compounds:
    A. at least one polyalkylene glycol having a molecular weight of 300 to 800
    B. optionally at least one polyalkylene glycol B having a molecular weight below 300
    C. at least one alkoxylated trihydric polyol
    D. optionally at least one alkoxylated tetrahydric to hexahydric polyol
    E. at least one polycarboxylic acid or a derivative thereof
    F. at least one unsaturated monocarboxylic acid or a derivative thereof.

8. A process for the surface treatment of a substrate with a binder or paint, characterized in that the binder claimed in at least one of claims 1 to 6 is used as the binder.

9. A process as claimed in claim 8, characterized in that, after application, the binder is cured by heat and/ or by peroxides.

10. A process as claimed in claim 8, characterised in that, after application, the binder containing an added photoinitiator is cured by UV irradiation.


**Revendications**

1. Liants solubles dans l'eau ayant au moins une double liaison polymérisable, à base de polyalkylèneglycols, d'un polyol alkoxylé ainsi que d'acides carboxyliques, caractérisés en ce qu'ils sont obtenus par condensation des composés suivants :
    A. au moins un polyalkylèneglycol ayant un poids moléculaire de 300 à 800
    B. le cas échéant, au moins un polyalkylèneglycol ayant un poids moléculaire inférieur à 300
    C. au moins un polyol alkoxylé trivalent
    D. le cas échéant au moins un polyol alkoxylé ayant plus de 3 groupes hydroxy terminaux
    E. au moins un acide polycarboxylique ou un dérivé de cet acide
    F. au moins un acide monocarboxylique non saturé ou un dérivé de cet acide.

2. Liants hydrosolubles suivant la revendication 1, caractérisés en ce qu'ils sont obtenus par réaction
    de 10 à 30 parties en poids de polyalkylèneglycol A,
    de 0 à 20 parties en poids de polyalkylèneglycol B,
    de 20 à 60 parties en poids de polyol alkoxylé C,
    de 0 à 10 parties en poids de polyol alkoxylé D,
    de 10 à 30 parties en poids d'acide polycarboxylique E,
    de 5 à 25 parties en poids d'acide carboxylique non saturé F.

3. Liants suivant au moins l'une des revendications précédentes, caractérisés en ce que le polyol C présente trois groupes hydroxy terminaux et 2 à 20 moles de motifs oxyde d'éthylène et/ou oxyde de propylène par mole de polyol.

4. Liants suivant l'une au moins des revendications précédentes, caractérisés en ce que le polyol D présente plus de trois groupes hydroxy terminaux et 1 à 20 motifs oxyde d'éthylène et/ou oxyde de propylène.

5. Liants suivant l'une au moins des revendications précédentes, caractérisés en ce que l'acide polycarboxylique E est un acide dicarboxylique ou tricarboxylique ou son anhydride.

6. Liants suivant l'une au moins des revendications précédentes, caractérisés en ce que l'acide polycarboxylique E est.l'acide maléique, l'anhydride d'acide. maléique ou l'acide fumarique et l'acide carboxylique non saturé F est l'acide acrylique ou l'acide méthacrylique.

7. Procédé de production de polyesters ayant au moins une double liaison polymérisable suivant la revendication 1, caractérisé par la réaction des composés suivants
   A. au moins un polyalkylèneglycol ayant un poids moléculaire de 300 à 800
   B. le cas échéant au moins un polyalkylèneglycol B ayant un poids moléculaire inférieur à 300
   C. au moins un polyol trivalent alkoxylé
   D. le cas échéant au moins un polyol tétravalent à hexavalent alkoxylé
   E. au moins un acide polycarboxylique ou un dérivé de cet acide
   F. au moins un acide monocarboxylique non saturé ou un dérivé de cet acide.

8. Procédé de traitement de surface d'un substrat avec un liant ou une laque, caractérisé en ce qu'on utilise comme liant un liant suivant l'une au moins des revendications 1 à 6.

9. Procédé suivant la revendication 8, caractérisé en ce que le liant est durci par voie thermique et/ou par l'action d'un peroxyde après son application.

10. Procédé suivant la revendication 8, caractérisé en ce que le liant additionné d'un photo-initiateur est durci après son application par l'action de rayons ultraviolets.